# FASCICULE DE BREVET EUROPEEN

(11) **EP 1 454 457 B1**
(45) Date de publication et mention de la délivrance du brevet: **02.11.2005**
(21) Numéro de dépôt: 02796904.7
(22) Date de dépôt: 11.12.2002
(51) Int. Cl.: H04L 12/26, H04L 12/28

(54) **DISPOSITIF POUR LA SURVEILLANCE D'UN RESEAU**
VORRICHTUNG ZUR NETZÜBERWACHUNG
Device for network monitoring

(30) Priorité: 13.12.2001 FR 0116073
(43) Date de publication de la demande: 08.09.2004
(73) Titulaire: TELEDIFFUSION DE FRANCE, 75732 Paris Cédex 15 (FR)
(72) Inventeur: PESME, Antoine, F-57950 Montigny les Metz (FR); MAFILLE, Daniel, F-57000 Metz (FR); Baina, Jamal, 54250 cHAMPIGNEUILLES (FR)
(74) Mandataire: Bentz, Jean-Paul
(86) Numéro de dépôt international: PCT/FR2002/004277
(87) Numéro de publication internationale: WO 2003/051004

(56) Documents cités:
- US-A- 5 961 604

## Description

L'invention concerne un dispositif de métrologie pour la surveillance automatique d'un réseau de diffusion. L'invention peut notamment être utilisée pour la surveillance de la qualité des signaux diffusés, tels que des signaux audio et / ou vidéo, numériques ou analogiques. Le réseau peut être un réseau de radiodiffusion un réseau câblé, etc.

Un réseau de diffusion comprend de manière connue un ensemble de stations relais qui reçoivent un signal diffusé par une station amont ou une station de tête émettrice et le propagent vers des stations aval et / ou vers un récepteur tel qu'un téléviseur par exemple. La zone couverte par le signal diffusé dépend bien sûr du nombre de stations relais et de leur répartition géographique.

Les signaux diffusés sont le plus souvent des signaux multiplexés comprenant une ou des composantes audio et /ou vidéo et /ou des données. Les composantes audio et / ou vidéo sont par exemple relatives à des programmes de radio ou de télévision. Les données sont par exemple des données utilisateur, à destination d'un utilisateur recevant le signal diffusé. Les données peuvent également être des données de pilotage à destination d'équipements du réseau recevant le signal diffusé : stations relais, décodeur d'un téléviseur, etc.

Les composantes audio, vidéos et les données utilisateur n'ont pas de signification particulière pour les équipements du réseau de diffusion. Par contre, les données de pilotage pilotent le fonctionnement, définissent un réglage, etc... de l'équipement auquel elles sont destinées.

Un réseau de télégestion complète en général le réseau de diffusion dans le but de suivre le fonctionnement des équipements du réseau de diffusion et de les télécommander. Pour ce faire, les équipements du réseau de diffusion munis d'une interface de communication appropriée sont connectés à un dispositif de gestion par l'intermédiaire d'un réseau de communication externe, par exemple un réseau de téléphonie.

Un réseau de surveillance est le plus souvent prévu en complément, notamment dans le but de contrôler la qualité du signal diffusé (détermination d'une dégradation éventuelle), pour ensuite rétablir si nécessaire cette qualité.

De manière connue, un tel réseau de surveillance comprend un ensemble de dispositifs de métrologie installés en des endroits névralgiques du réseau de diffusion, par exemple au voisinage de certaines stations relais. Tous les dispositifs de métrologie sont connectés à un dispositif de supervision par l'intermédiaire d'un réseau de communication externe (par exemple un réseau de téléphonie). Le dispositif de supervision du réseau de surveillance et le dispositif de gestion du réseau de télégestion peuvent être un seul et même dispositif, réalisant l'ensemble des fonctions de l'un et de l'autre.

Un système reflétant l'état de la technique est décrit dans le document US 5 961 604.

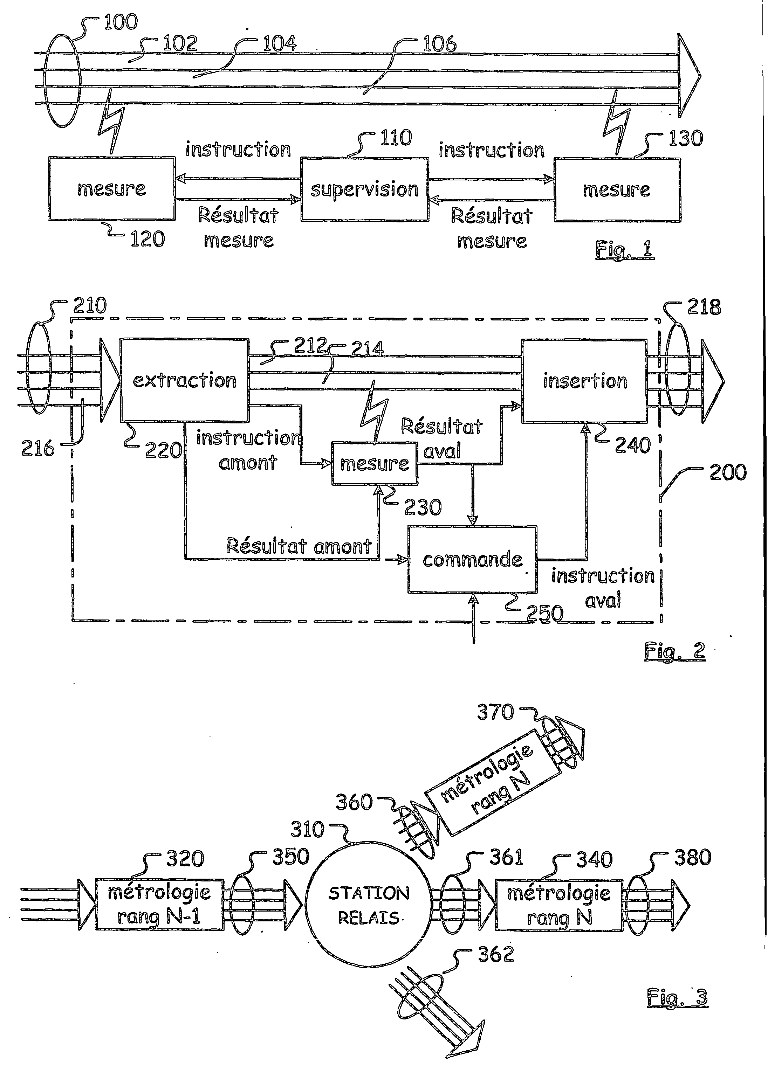

La figure 1 présente un schéma simplifié d'un réseau de surveillance comprenant un dispositif de supervision 110 et deux dispositifs de mesure 120, 130 destinés à la surveillance d'un signal diffusé 100.

Un réseau de surveillance tel que celui de la figure 1 est monté en étoile : le dispositif de supervision pilote tous les dispositifs de métrologie qui lui retournent sur demande une information sur la qualité du signal diffusé dans la zone géographique qu'ils ont étudiée. Le dispositif de supervision du réseau de diffusion fédère tous les dispositifs de métrologie qui, de leur propre initiative ou sur demande, peuvent lui communiquer de l'information. Plus généralement, le dispositif de supervision gère l'ensemble du réseau de surveillance en assurant les deux fonctions principales suivantes : une fonction commande des dispositifs de métrologie (demande d'informations aux dispositifs de métrologie, réglage d'un dispositif de métrologie, etc.) et une fonction traitement de l'information et alarme (exploitation des informations reçues, retour d'expérience à une personne chargée de la supervision du réseau de diffusion, etc.).

Comme on vient de le voir, la surveillance d'un réseau de diffusion, telle qu'elle est réalisée actuellement nécessite la construction d'un réseau de surveillance parallèle au réseau de diffusion à surveiller et qui s'ajoute (soit en terme de liaisons, soit en terme de charge) au réseau de télégestion qui accompagne le réseau de diffusion. Ceci augmente d'autant le coût d'installation du réseau de diffusion.

La recherche d'une diminution des coûts d'installation a conduit à l'utilisation d'un réseau de communication externe (par exemple un réseau de téléphonie). Si cette solution permet de réduire les coûts, elle entraîne cependant des difficultés techniques dûes essentiellement au fait que les délais d'acheminement d'une communication sur un réseau de communication externe sont mal maîtrisés. Par exemple, cette solution ne permet pas de synchroniser ou de coordonner de manière fiable le fonctionnement de plusieurs dispositifs de métrologie.

Enfin, les liens entre les dispositifs de métrologie du réseau de surveillance passent nécessairement par le dispositif de supervision central, et donc par le réseau de communication externe.

Un objet de l'invention est de réaliser un dispositif de métrologie pouvant être intégré dans le réseau de diffusion principal.

Un autre objet de l'invention est de réaliser des dispositifs de métrologie aptes à effectuer des opérations synchronisées sur un signal diffusé.

Un autre objet de l'invention est de réaliser autrement la commande d'un dispositif de métrologie, sans passer par le dispositif de supervision du réseau de surveillance. L'utilisation du réseau de communication externe est alors limitée à des actions pour lesquelles la précision des délais d'acheminement n'est pas essentielle et la charge du dispositif de supervision est diminuée.

Avec ces objectifs en vue, l'invention concerne un dispositif de métrologie (200) pour la surveillance d'un signal diffusé amont comprenant une composante principale et des données de pilotage amont. Le dispositif de métrologie comprend :
- un circuit d'extraction (220), pour extraire les données de pilotage amont du signal diffusé amont et fournir une instruction amont,
- un circuit de mesure (230) pour réaliser une mesure d'un paramètre du signal diffusé amont en fonction de l'instruction amont et fournir un résultat de mesure.

Selon l'invention, le dispositif de métrologie comprend également :
- un circuit de commande (250), pour produire une instruction aval à partir du résultat de mesure et d'un résultat amont produit par le circuit d'extraction (220) à partir des données de pilotage amont,
- un circuit d'insertion (240), pour produire un signal à diffuser aval comprenant d'une part la composante principale du signal diffusé amont et d'autre part des données de pilotage aval comprenant l'instruction aval.

Les données de pilotage peuvent également comprendre le résultat amont et / ou le résultat de mesure.

Un dispositif de métrologie selon l'invention peut ainsi être piloté directement par l'intermédiaire du signal diffusé qu'il surveille, et il peut en complément piloter un éventuel dispositif de métrologie ou un équipement du réseau de diffusion par l'intermédiaire de l'instruction aval qu'il insère dans le signal à diffuser amont.

Avec l'invention, toutes les communications liées au pilotage des dispositifs de métrologie et /ou des équipements du réseau de diffusion passent par l'intermédiaire du signal diffusé. Le réseau de surveillance de la qualité du signal diffusé par le réseau de diffusion peut donc être allégé car le dispositif de supervision du réseau de surveillance et les lignes de communication externes ne sont plus mis à contribution pour réaliser la fonction commande des dispositifs de métrologie.

Tous les problèmes liés à l'utilisation d'un réseau de communication externe pour la fonction commande sont ainsi résolus : temps de transmission des informations, synchronisation de plusieurs dispositifs de métrologie, coûts, etc. Ceci permet également d'envisager une étude plus fine du signal diffusé : par exemple, des mesures en synchronisme du signal diffusé pourront être envisagées pour plusieurs dispositifs de métrologie. Des mesures de qualitométrie subjective, de taux d'erreur deviennent ainsi envisageables avec l'invention.

Avec l'invention, le réseau de surveillance n'assure plus qu'une fonction de traitement de l'information reçue des dispositifs de métrologie et d'alarme en cas de nécessité.

Selon des mode de réalisation du dispositif de métrologie, l'instruction aval peut être :
- une instruction de pilotage du fonctionnement d'une station relais ou d'un récepteur final du réseau de diffusion, recevant le signal à diffuser aval, ou
- une commande d'une mesure à effectuer sur le signal à diffuser aval, ou
- une mise à jour, partielle ou complète, des fonctions internes des dispositifs de métrologie avals.

L'invention concerne également un réseau de diffusion, comprenant au moins un dispositif de métrologie tel que décrit ci-dessus.

Le réseau de diffusion peut également comprendre un dispositif de métrologie de rang N1 (320) et un dispositif de métrologie de rang N2 (330, 340) strictement supérieur à N1. L'instruction amont produite par le circuit d'extraction (220) du dispositif de rang N2 (330) correspond alors à l'instruction aval produite par le circuit de commande (250) du dispositif de métrologie de rang N1 (320).

Par rang d'un dispositif de métrologie, il faut comprendre ici la position dudit dispositif par rapport à une station de tête du réseau. Ainsi, le dispositif de rang N2 supérieur à N1 reçoit le signal diffusé après que le dispositif de rang N1 l'ait reçu, éventuellement modifié, et transmis. Le dispositif de rang N2 est dit en aval du dispositif de rang N1.

Selon l'invention, le dispositif de rang N1 peut piloter le fonctionnement du dispositif de rang N2. Le dispositif N1 peut aussi plus simplement fournir au dispositif de rang N2 un résultat de mesure à exploiter, ou simplement à transmettre.

Le réseau de diffusion comprend également une station de tête pour émettre le signal diffusé et l'instruction amont extraite par le circuit d'extraction du dispositif de métrologie de rang N1 est par exemple une instruction insérée dans le signal diffusé par la station de tête, ou par un dispositif de métrologie de rang N0 associé à la station de tête.

Le réseau de diffusion comprend également un récepteur final pour recevoir et exploiter le signal diffusé, et l'instruction aval produite par le circuit de commande (250) du dispositif de métrologie (200) de rang N2 est par exemple destinée à piloter le fonctionnement du récepteur final. Le récepteur final est par exemple un récepteur final de surveillance.

L'invention sera mieux comprise et d'autres caractéristiques et avantages apparaîtront à la lecture de la description qui va suivre, d'un exemple de mise en oeuvre d'un dispositif de métrologie et d'un réseau de diffusion selon l'invention. La description est à lire en relation avec le dessin annexé dans lequel :
- la figure 1, déjà décrite, est un schéma d'un réseau de surveillance connu d'un réseau de diffusion,
- la figure 2 est un schéma d'un dispositif de métrologie, selon l'invention, et
- la figure 3 est un schéma simplifié partiel d'un réseau de diffusion selon l'invention.

Un dispositif de métrologie 200 selon l'invention est représenté sur la figure 2. Le dispositif 200 permet la surveillance d'un signal diffusé amont 210.

Dans un exemple, le signal amont 210 est un signal multiplexé comprenant notamment une composante audio 212 et une composante vidéo 214 relatives à une chaîne de télévision, et des données de pilotage 216. La composante audio 212 et la composante vidéo 214 forment le signal diffusé principal.

Le dispositif 200 comprend un circuit d'extraction 220 de données, un circuit de mesure 230, un circuit d'insertion de données 240, un circuit de commande 250.

Le circuit d'extraction 220 reçoit le signal diffusé amont 210, extrait les données de pilotage qu'il contient et fournit une instruction amont. Le circuit de mesure 230 réalise, en fonction de l'instruction amont, une ou plusieurs mesures d'un ou plusieurs paramètres du signal diffusé amont 210, notamment sur les composantes audio 212 et / ou vidéo 214 du signal diffusé amont 210.

Le dispositif 230 fournit ensuite un résultat aval relatif au(x) paramètre(s) étudié(s) du signal diffusé amont 210, en fonction de l'instruction amont.

Les données de pilotage extraites peuvent être des instructions de commande pour le circuit de mesure 230 ; le dispositif 230 peut dans ce cas être un simple moyen de mesure d'un ou plusieurs paramètres de composantes audio et / ou vidéo (mesureur de qualité, de puissance, etc.). Le résultat de mesure est alors le résultat direct des mesures effectuées. Dans un exemple, une instruction est du type "mesurer la qualité de l'image de la composante vidéo", le résultat de mesure est dans ce cas une note de qualité qui est diffusée ensuite en direction de stations et / ou de dispositifs de métrologie aval, après insertion dans le signal diffusé amont.

Les données de pilotage extraites peuvent être des instructions de commande de synchronisme (par exemple "repérer l'image Y dans la composante vidéo"), permettant ainsi d'effectuer une étude d'un extrait précis du signal diffusé. Il est alors possible de synchroniser l'action de circuits de mesure de plusieurs dispositifs de métrologie, par exemple pour effectuer une même mesure sur le signal diffusé principal, sur un même extrait du signal diffusé (même image ou groupe d'images de la composante vidéo, ou même extrait du signal audio, mais à des instants différents, mais décalés dans le temps à cause des temps de propagation dans l'espace du signal diffusé).

Les données de pilotage extraites par le dispositif 220 peuvent également être des résultats de mesure amont associés à des instructions de commande pour le circuit de mesure 230 ; dans un exemple, le résultat amont est : "le signal de référence est égal à Y0, le taux d'erreur à l'instant TN-1 est égal à RN = YN-1/Y0" ; l'instruction amont est : "calculer le taux d'erreur RN = YN / Y0 à l'instant TN, puis calculer la dégradation du taux d'erreur RN - RN-1.

Le dispositif 230 peut dans ce cas être un moyen de mesure de la qualité de la composante vidéo, associé à un comparateur. Le résultat aval fourni par le circuit de mesure est alors le résultat de la comparaison.

L'instruction amont et / ou le résultat amont sont contenus dans le signal diffusé amont. Ils ont été introduits dans le signal diffusé :
- soit par l'intermédiaire de la station de tête du réseau,
- soit par l'intermédiaire d'un autre dispositif de métrologie N1 situé entre la station de tête et le dispositif N2 qui le reçoit.

Le circuit de commande 250 reçoit le résultat de mesure amont et le résultat aval (s'il existe) fourni par le dispositif 230, et il produit en retour une instruction aval. De même que l'instruction amont le résultat amont est extrait du signal diffusé amont par le circuit d'extraction 220. Le résultat amont a par exemple été introduit dans le signal diffusé par un dispositif de métrologie amont selon l'invention, qui scrute le signal diffusé et qui est situé en amont du dispositif de métrologie recevant les résultats amont.

L'instruction aval peut comprendre des instructions pour la commande d'un circuit de mesure et/ ou d'une station relais et /ou d'un récepteur final (exemple : changement de fréquence future du signal diffusé, réinitialiser un circuit de mesure). L'instruction aval peut également comprendre des résultats de mesure obtenus par le circuit de mesure 230 associé au circuit de commande 240, ou bien par un circuit de mesure situé en amont de celui-ci. L'ensemble de ces résultats pourront être exploités par la suite par un autre circuit de mesure recevant le signal aval (pour effectuer une comparaison par exemple), ou bien être mémorisés par un récepteur final de surveillance pour une exploitation ultérieure.

Le circuit d'insertion 240 reçoit le résultat aval, et l'instruction aval et produit un signal aval 218 à diffuser, comprenant une composante audio et une composante vidéo identiques à celles correspondantes du signal amont 210, et comprenant des données de pilotage. Les données de pilotage comprennent notamment l'instruction aval et /ou le résultat aval. On notera que les données de pilotage contenues dans le signal aval peuvent être partiellement ou totalement différentes de celles du signal amont.

Un dispositif de métrologie selon l'invention est ainsi apte à extraire des données de pilotage du signal amont et à produire après traitement un signal aval comprenant des données de pilotage mises à jour par le circuit de commande et le circuit de mesure.

Ainsi, le circuit de commande d'un dispositif de métrologie 200 de rang N1 permet de piloter un récepteur final et /ou un dispositif de métrologie aval de rang N2 > N1 en fonction de résultats de mesure acquis au rang N1, voire en amont du dispositif de rang N1. Par rang d'un dispositif de métrologie, il faut comprendre ici la position d'un dispositif par rapport à la station émettrice. Par exemple, un dispositif de rang N2 > N1 reçoit le signal diffusé *après* que le dispositif de rang N1 l'ait reçu et transmis.

D'une manière générale, un dispositif de métrologie selon l'invention a les caractéristiques suivantes :
- il peut réaliser, sur le signal diffusé, des mesures dont les instructions de commande correspondantes sont véhiculées par le signal principal lui-même,
- il peut.transmettre des instructions de pilotage et / ou des résultats de mesure à des dispositifs de métrologie aval et / ou à tout autre équipement aval du réseau de diffusion.

Un réseau de diffusion selon l'invention comprend, de même qu'un réseau connu, une station de tête, pour émettre le signal à diffuser, au moins un récepteur final, pour recevoir et exploiter le signal diffusé, et éventuellement une ou des stations relais, pour recevoir le signal diffusé et le transmettre à l'identique.

Un réseau de diffusion selon l'invention comprend également un ensemble de dispositifs de métrologie selon l'invention répartis dans la zone de diffusion couverte par le signal diffusé.

La figure 3 présente de manière simplifiée une partie d'un réseau de diffusion selon l'invention, qui comprend notamment une station relais 310 et trois dispositifs de métrologie 320, 330, 340 réalisés selon le schéma de la figure 2. Les dispositifs de métrologie sont situés sur la figure 3 au voisinage de la station relais et aucune échelle n'est respectée, par souci de clarté de la figure 3. Dans la pratique, les dispositifs 320, 330, 340 peuvent être situés entre quelques centimètres et quelques dizaines de milliers de kilomètres d'une station relais.

La station relais 310 reçoit le signal 350 diffusé aval de rang N-1 et retransmet à l'identique trois signaux 360, 361, 362 diffusés amont de rang N dans trois directions principales. Bien sûr, en pratique et de manière connue, la station relais peut retransmettre le signal diffusé dans plus de trois directions principales, dans un demi-plan, etc.

Le dispositif de métrologie 320 de rang N-1, reçoit un signal diffusé amont de rang N-1, propagé par un équipement non représenté du réseau, et retourne le signal 350 aval de rang N-1, dans lequel il a éventuellement modifié les données de pilotage.

Le dispositif de métrologie 330 de rang N reçoit le signal diffusé 360 amont de rang N et retourne le signal 370 aval de rang N, dans lequel il a éventuellement modifié les données de pilotage.

De la même façon, le dispositif de métrologie 340 reçoit le signal diffusé 361 amont de rang N et retourne le signal 380 aval de rang N, dans lequel il a éventuellement modifié les données de pilotage. Il est à noter que les signaux 370, 380 peuvent comprendre des données de pilotage différentes car ces données sont modifiées, éventuellement de manière différente, par des dispositifs de métrologie différents.

Les dispositifs 320, 330, 340 sont réalisés selon le schéma de la figure 2 et fonctionnement de manière similaire. Tout d'abord, ils reçoivent un signal diffusé amont et extraient (circuit d'extraction 220) des données de pilotage des instructions amont et / ou des résultats amont. Ils réalisent ensuite des opérations de mesure (circuit de mesure 230) sur les composantes audio et / ou vidéo du signal diffusé en fonction des instructions amont extraites. Eventuellement ils déterminent des instructions aval, pour le pilotage de dispositifs de métrologie aval. Enfin, ils insèrent de nouvelles données de pilotage (résultats de mesure et /ou instructions aval) dans le signal diffusé, formant ainsi un signal diffusé aval.

Tous les dispositifs de métrologie sont pilotés en fonction des données de pilotage inclues dans le signal diffusé amont qu'ils reçoivent. Ces données de pilotage peuvent comprendre selon le cas, des instructions insérées initialement dans le signal principal diffusé par une station de tête de réseau, des instructions insérés par un ou des dispositifs de métrologie de rang inférieur (ie situés entre la station de tête et le dispositif de métrologie concerné) dans le signal diffusé au cours de sa propagation. Par ailleurs, les résultats de mesure (tous ou seulement les résultats pertinents selon le cas) sont transmis à un récepteur final et /ou à un ou des dispositifs de métrologie aval par l'intermédiaire du signal diffusé.

## Revendications

1. Dispositif de métrologie (200) pour la surveillance d'un signal diffusé amont comprenant une composante principale et des données de pilotage amont, le dispositif de métrologie (200) comprenant
- un circuit d'extraction (220), pour extraire les données de pilotage amont du signal diffusé amont et fournir une instruction amont,
- un circuit de mesure (230) pour réaliser une mesure d'un paramètre du signal diffusé amont en fonction de l'instruction amont et fournir un résultat de mesure,
le dispositif (200) de métrologie étant **caractérisé en ce qu'**il comprend également :
- un circuit de commande (250), pour produire une instruction aval à partir du résultat de mesure et d'un résultat amont produit par le circuit d'extraction (220) à partir des données de pilotage amont,
- un circuit d'insertion (240), pour produire un signal à diffuser aval comprenant d'une part la composante principale du signal diffusé amont et d'autre part des données de pilotage aval comprenant l'instruction aval.

2. Dispositif selon la revendication 1, **caractérisé en ce que** les données de pilotage aval comprennent également le résultat amont et / ou le résultat de mesure.

3. Dispositif selon l'une des revendications 1 ou 2, **caractérisé en ce que** l'instruction aval est une instruction de pilotage du fonctionnement d'une station relais ou d'un récepteur final du réseau de diffusion, recevant le signal à diffuser aval.

4. Dispositif selon l'une des revendications 1 à 3, **caractérisé en ce que** l'instruction aval est une commande d'une mesure à effectuer sur le signal à diffuser aval.

5. Réseau de diffusion, **caractérisé en ce qu'**il comprend au moins un dispositif de métrologie (200) selon l'une des revendications 1 à 4.

6. Réseau selon la revendication 5, **caractérisé en ce qu'**il comprend un dispositif de métrologie de rang N1 (320) et un dispositif de métrologie de rang N2 (330, 340) strictement supérieur à N1, et **en ce que** l'instruction amont produite par le circuit d'extraction (220) du dispositif de rang N2 (330) correspond à l'instruction aval produite par le circuit de commande (250) du dispositif de métrologie de rang N1 (320).

7. Réseau selon l'une des revendications 5 ou 6, comprenant également une station de tête pour émettre le signal diffusé, le réseau étant **caractérisé en ce que** l'instruction amont extraite par le circuit d'extraction du dispositif de métrologie de rang N1 est une instruction insérée dans le signal diffusé par la station de tête et / ou par un dispositif de métrologie de rang N0 associé à 1a station de tête.

8. Réseau selon l'une des revendications 5 à 7, comprenant également un récepteur final pour recevoir et exploiter le signal diffusé, le réseau étant **caractérisé en ce que** l'instruction aval produite par le circuit de commande (250) du dispositif de métrologie (200) de rang N2 est destinée à piloter le fonctionnement de dispositifs de métrologie de rang supérieur.

9. Réseau selon la revendication 8, **caractérisé en ce que** l'instruction aval produite par le circuit de commande (250) du dispositif de métrologie (200) de rang N2 est destinée également à piloter le fonctionnement du récepteur final de surveillance.

## Patentansprüche

1. Metrologie-Vorrichtung (200) zur Überwachung eines vorgeschalteten Streusignals, das eine Hauptkomponente und vorgeschaltete Steuerdaten aufweist, wobei die Metrologie-Vorrichtung (200) aufweist:
- eine Ausleseschaltung (220), um die vorgeschalteten Steuerdaten aus dem vorgeschalteten Streusignal zu auszulesen und einen vorgeschalteten Befehl zu liefern,
- eine Messschaltung (230), um eine Messung eines Parameters des vorgeschalteten Streusignals in Abhängigkeit vom vorgeschalteten Befehl durchzuführen und ein Messergebnis zu liefern,
wobei die Metrologievorrichtung (200) **dadurch gekennzeichnet ist, dass** sie ebenfalls aufweist:
- eine Steuerschaltung (250), um ausgehend vom Messergebnis und einem vorgeschalteten Ergebnis, das von der Ausleseschaltung (220) ausgehend von den vorgeschalteten Steuerdaten erzeugt wird, einen nachgeschalteten Befehl zu erzeugen,
- eine Einfügeschaltung (240), um ein nachgeschaltetes zu streuendes Signal zu erzeugen, das einerseits die Hauptkomponente des vorgeschalteten Streusignals und andererseits nachgeschaltete Steuerdaten aufweist, die den nachgeschalteten Befehl enthalten.

2. Vorrichtung nach Anspruch 1, **dadurch gekennzeichnet, dass** die nachgeschalteten Steuerdaten ebenfalls das vorgeschaltete Ergebnis und/oder das Messergebnis enthalten.

3. Vorrichtung nach einem der Ansprüche 1 oder 2, **dadurch gekennzeichnet, dass** der nachgeschaltete Befehl ein Steuerbefehl für den Betrieb einer Relaisstation oder eines Endempfängers des Diffusionsnetzes ist, der das nachgeschaltete zu streuende Signal empfängt.

4. Vorrichtung nach einem der Ansprüche 1 bis 3, **dadurch gekennzeichnet, dass** der nachgeschaltete Befehl eine Steuerung einer am nachgeschalteten zu streuenden Signal durchzuführenden Messung ist.

5. Diffusionsnetz, **dadurch gekennzeichnet, dass** es mindestens eine Metrologie-Vorrichtung (200) nach einem der Ansprüche 1 bis 4 aufweist.

6. Netz nach Anspruch 5, **dadurch gekennzeichnet, dass** es eine Metrologie-Vorrichtung vom Rang N1 (320) und eine Metrologie-Vorrichtung vom Rang N2 (330, 340) strikt größer als N1 aufweist, und dass der von der Ausleseschaltung (220) der Vorrichtung des Rangs N2 (330) erzeugte vorgeschaltete Befehl dem nachgeschalteten Befehl entspricht, der von der Steuerschaltung (250) der Metrologie-Vorrichtung des Rangs N1 (320) erzeugt wird.

7. Netz nach einem der Ansprüche 5 oder 6, das ebenfalls eine Kopfstation aufweist, um das Streusignal zu senden, wobei das Netz **dadurch gekennzeichnet ist, dass** der vorgeschaltete Befehl, der von der Ausleseschaltung der Metrologie-Vorrichtung des Rangs N 1 ausgelesen wird, ein Befehl ist; der in das von der Kopfstation und/oder von einer Metrologie-Station des Rangs N0, die der Kopfstation zugeordnet ist, gestreute Signal eingefügt ist.

8. Netz nach einem der Ansprüche 5 bis 7, das ebenfalls einen Endempfänger aufweist, um das Streusignal zu empfangen und auszuwerten, wobei das Netz **dadurch gekennzeichnet ist, dass** der von der Steuerschaltung (250) der Metrologie-Vorrichtung (200) des Rangs N2 erzeugte nachgeschaltete Befehl dazu bestimmt ist, den Betrieb von Metrologie-Vorrichtungen höheren Rangs zu steuern.

9. Netz nach Anspruch 8, **dadurch gekennzeichnet, dass** der von der Steuerschaltung (250) der Metrologie-Vorrichtung (200) des Rangs N2 erzeugte nachgeschaltete Befehl ebenfalls dazu bestimmt ist, den Betrieb des Überwachungs-Endempfängers zu steuern.

## Claims

1. Metrology device (200) for monitoring an upstream broadcast signal comprising a main component and upstream control data, the metrology device (200) comprising
- an extraction circuit (220) for extracting the upstream control data of the upstream broadcast signal and supplying an upstream instruction,
- a measuring circuit (230) for making a measurement of a parameter of the upstream broadcast signal according to the upstream instruction and supplying a measurement result,
the metrology device (200) being **characterised in that** it also comprises:
- a control circuit (250) for producing a downstream instruction from the measurement result and an upstream result produced by the extraction circuit (220) from the upstream control data,
- an insertion circuit (240) for producing a downstream signal to be broadcast comprising on the one hand the main component of the upstream broadcast signal and on the other hand downstream control data comprising the downstream instruction.

2. Device according to claim 1, **characterised in that** the downstream control data also comprise the upstream result and/or the measurement result.

3. Device according to one of claims 1 or 2, **characterised in that** the downstream instruction is an instruction controlling the functioning of a relay station or of a final receiver in the broadcasting network, receiving the downstream signal to be broadcast.

4. Device according to one of claims 1 to 3, **characterised in that** the downstream instruction is a command for a measurement to be made on the downstream signal to be broadcast.

5. Broadcasting network, **characterised in that** it comprises at least one metrology device (200) according to one of claims 1 to 4.

6. Network according to claim 5, **characterised in that** it comprises a metrology device of rank N1 (320) and a metrology device of rank N2 (330, 340) strictly greater than N1, and **in that** the upstream instruction produced by the extraction circuit (220) of the device of rank N2 (330) corresponds to the downstream instruction produced by the control circuit (250) of the metrology device of rank N1 (320).

7. Network according to one of claims 5 or 6, also comprising a head station for transmitting the broadcast signal, the network being **characterised in that** the upstream instruction extracted by the extraction circuit of the metrology device of rank N1 is an instruction inserted in the signal broadcast by the head station and/or by a metrology device of rank N0 associated with the head station.

8. Network according to one of claims 5 to 7, also comprising a final receiver for receiving and using the broadcast signal, the network being **characterised in that** the downstream instruction produced by the control circuit (250) of the metrology device (200) of rank N2 is intended to control the functioning of metrology devices of higher rank.

9. Network according to claim 8, **characterised in that** the downstream instruction produced by the control circuit (250) of the metrology device (200) of rank N2 is also intended to control the functioning of the final monitoring receiver.
